(19) Europäisches Patentamt
European Patent Office
Office européen des brevets

(11) Veröffentlichungsnummer: **0 361 293 B1**

(12) **EUROPÄISCHE PATENTSCHRIFT**

(45) Veröffentlichungstag der Patentschrift: **20.07.94**

(51) Int. Cl.$^5$: **C09B 67/34**, C09B 69/06

(21) Anmeldenummer: **89117365.0**

(22) Anmeldetag: **20.09.89**

# (54) Verfahren zur Herstellung konzentrierter Lösungen kationischer Farbstoffe.

(30) Priorität: **30.09.88 DE 3833195**

(43) Veröffentlichungstag der Anmeldung:
**04.04.90 Patentblatt 90/14**

(45) Bekanntmachung des Hinweises auf die Patenterteilung:
**20.07.94 Patentblatt 94/29**

(84) Benannte Vertragsstaaten:
**CH DE FR GB IT LI**

(56) Entgegenhaltungen:
**FR-A- 2 097 877**
**US-A- 3 956 271**

(73) Patentinhaber: **BASF Aktiengesellschaft**
**Carl-Bosch-Strasse 38**
**D-67063 Ludwigshafen(DE)**

(72) Erfinder: **Dix, Johannes Peter, Dr.**
**Ludwigshafener Strasse 125**
**D-6708 Neuhofen(DE)**
Erfinder: **Hansen, Guenter, Dr.**
**Alwin-Mittasch-Platz 8**
**D-6700 Ludwigshafen(DE)**
Erfinder: **Kast, Hellmut, Dr.**
**An der Tuchbleiche 4**
**D-6712 Bobenheim-Roxheim(DE)**

EP 0 361 293 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung konzentrierter Lösungen kationischer Farbstoffe, wobei man die kationischen Farbstoffe, die die bei ihrer Herstellung üblicherweise anfallenden Anionen aufweisen, in wäßrig-glykoletherhaltigem Medium mit Alkalisalzen von Monocarbonsäuren und gegebenenfalls mit Komplexbildnern behandelt und die organische Phase, die die Farbstoffe in Form ihrer Monocarbonsäuresalze enthält, von der wäßrigen Phase abtrennt.

Kationische Farbstoffe im erfindungsgemäßen Sinn sind z.B. die im Colour Index unter dem Stichwort "Basic Dyes" aufgeführten Verbindungen, die in K. Venkataraman "The Chemistry of Synthetic Dyes", Vol. 4, Kap. 3 bis 5, Academic Press, New York, 1971, beschriebenen Farbstoffe sowie die zahlreich in der Patentliteratur beschriebenen Farbstoffe, die eine kationische Gruppe aufweisen.

Solche Farbstoffe stammen z.B. aus der Klasse der Mono- oder Polyazofarbstoffe, Anthrachinonfarbstoffe, Diphenylmethanfarbstoffe, Triphenylmethanfarbstoffe, Xanthenfarbstoffe, Pyryliumfarbstoffe, Acridinfarbstoffe, Azinfarbstoffe, Oxazinfarbstoffe, Thiazinfarbstoffe, Cyaninfarbstoffe oder Naphthostyrylfarbstoffe.

Bei ihrer Herstellung fallen die basischen Farbstoffe üblicherweise in Form ihrer Chloride, Sulfate, Methosulfate, Ethosulfate, Amidosulfonate, p-Toluolsulfonate, Oxalate, Nitrate, Phosphate oder Tetrachlorozinkate an.

In den meisten Fällen sind aber die kationischen Farbstoffe mit den genannten Gegenionen zur Herstellung konzentrierter Farbstofflösungen ungeeignet. Um jedoch die genannten Gegenionen gegen besser löslich machende Anionen auszutauschen ist in der Regel der Weg über die den kationischen Farbstoffen zugrundeliegende Base erforderlich. Diese Farbbasen sind oftmals unbeständig.

Aus der US-A-3 956 271 ist ein Verfahren zur Herstellung von konzentrierten Lösungen von kationischen Farbstoffen bekannt, wobei man ein schlecht lösliches Farbstoffsalz mit einem Carboxylat behandelt, dessen Kation zusammen mit dem Anion des Farbstoffsalzes wiederum ein schlecht lösliches Salz bildet.

Aufgabe der vorliegenden Erfindung war es nun, ein neues Verfahren bereitzustellen, mittels dessen es gelingen sollte, konzentrierte Lösungen von kationischen Farbstoffen auf einfache Weise herzustellen, wobei die Zwischenstufe der Farbbase nicht zu durchlaufen werden braucht.

Es wurde nun gefunden, daß die Herstellung konzentrierter Lösungen von kationischen Farbstoffen, vorteilhaft gelingt, wenn man die kationischen Farbstoffe, die als Gegenionen die bei ihrer Herstellung üblicherweise anfallenden Anionen aufweisen, in einem Reaktionsmedium, enthaltend Wasser und einen Glykolether, mit Alkalisalzen von Monocarbonsäuren und gegebenenfalls mit Komplexbildnern behandelt und die organische Phase, die die kationischen Farbstoffe in Form ihrer Monocarbonsäuresalze enthält, von der wäßrigen Phase abtrennt.

Geeignete Glykolether, die im erfindungsgemäßen Verfahren zur Anwendung kommen können, sind insbesondere solche, die mit salzhaltigem Wasser nicht vollständig mischbar sind. Beispielhaft sind $C_1$-$C_4$-Monoalkylether von Ethylenglykol oder 1,2-Propylenglykol, wie Ethylenglykolmonomethyl-, -monoethyl-, -monopropyl- oder -monobutylether, 1-Methoxypropan-2-ol, 1-Ethoxypropan-2-ol, 1-Propoxypropan-2-ol oder Butoxypropan-2-ol, oder auch Ethylenglykolmonophenylether zu nennen.

Die Verwendung von Ethylenglykolmonobutylether ist bevorzugt.

Als Alkalisalze der Monocarbonsäuren kommen z.B. die jeweiligen Lithium-, Natrium- oder Kaliumsalze in Betracht, wobei die Verwendung der Kaliumsalze und insbesondere die der Natriumsalze bevorzugt ist.

Geeignete Monocarbonsäuren, die den Alkalisalzen zugrundeliegen, sind z.B. Benzoesäure oder $C_1$-$C_{10}$-Alkansäuren, die durch Phenyl substituiert sein können, wie Ameisensäure, Essigsäure, Propionsäure, Buttersäure, Pentansäure, Hexansäure, Heptansäure, Octansäure, 2-Ethylhexansäure, Nonansäure, Decansäure oder Phenylessigsäure.

Die Verwendung der Alkalisalze von Ameisensäure, Essigsäure, Propionsäure, Buttersäure, Hexansäure, 2-Ethylhexansäure, Phenylessigsäure oder Benzoesäure ist bevorzugt. Insbesondere ist die Verwendung von Alkaliformiaten hervorzuheben.

Weisen die kationischen Farbstoffe als Gegenionen metallhaltige Kationen, z.B. Tetrachlorozinkat, auf, so ist es von Vorteil, dem Reaktionsmedium zusätzlich noch einen Komplexbildner, z.B. Nitrilotriessigsäure oder Ethylendiamintetraessigsäure, zuzusetzen, wobei die genannten Säuren vorzugsweise in Form ihrer Alkalisalze, insbesondere ihres Natriumsalzes zur Anwendung kommen.

Je Mol kationischer Farbstoff werden in der Regel 20 bis 60 Mol, vorzugsweise 30 bis 50 Mol des Alkalisalzes der Monocarbonsäure und gegebenenfalls 1,1 bis 1,3 Mol eines Komplexbildners zugesetzt.

Die Menge an Glykolether liegt im allgemeinen bei 50 bis 200 Gew.%, vorzugsweise 70 bis 110 Gew.%, jeweils bezogen auf das Gewicht des kationischen Farbstoffs. Wasser wird üblicherweise in einer Menge von 300 bis 800 Gew.%, vorzugsweise 400 bis 600 Gew.%, jeweils bezogen auf das Gewicht des kationischen Farbstoffs, verwendet.

Das erfindungsgemäße Verfahren wird zweckmäßig so durchgeführt, daß man den Preßkuchen des kationischen Farbstoffs, wie er bei der Produktion anfällt, in eine möglichst konzentrierte Lösung eines Alkalisalzes der Monocarbonsäure einrührt, dann den Glykolether, gegebenenfalls zusätzlich Wasser und gegebenenfalls den Komplexbildner zugibt und bei Raumtemperatur rührt. Ein Erwärmen beim Austausch ist nicht erforderlich, kann jedoch in manchen Fällen zweckmäßig sein. Die Phasentrennung erfolgt praktisch sofort. Nach dem Entfernen der wäßrigen Phase kann die organische Phase, die den kationischen Farbstoff enthält, gegebenenfalls noch mit einer konzentrierten Salzlösung des Alkalisalzes der Monocarbonsäure nachgewaschen werden. Überraschenderweise gelingt es so, die ursprünglich vorhandenen Gegenionen weitgehend bis praktisch vollständig zu entfernen, ohne dabei die Zwischenstufe der Farbbase durchlaufen zu müssen.

Nach Abtrennung der glykoletherhaltigen Phase, die den kationischen Farbstoff in Form seines Monocarbonsäuresalzes enthält, und gegebenenfalls nach Waschen dieser organischen Phase, liegt in der Regel schon eine beständige, hochkonzentrierte Lösung des kationischen Farbstoffs vor, die natürlich auch durch weitere Zusätze, wie Lösungsmittel oder Säuren, auf Typstärke oder auf einen bestimmten pH-Wert eingestellt werden kann. Zur pH-Regulierung eignet sich insbesondere Ameisensäure.

Die erfindungsgemäß hergestellten Lösungen eignen sich für alle Zwecke, bei denen Flüssigeinstellungen gewünscht werden. Besonders hervorzuheben ist die Eignung für die Gelfärberei von Acrylnitrilpolymerisaten.

Die folgenden Beispiele sollen die Erfindung näher erläutern.

Beispiel 1

Zu einer Mischung aus 739 g einer 42,5 gew.%igen Natriumformiatlösung, 49 g des Natriumsalzes der Nitrilotriessigsäure (90 gew.%ig), 108 g Ethylenglykolmonobutylether und 57 ml Wasser gab man 121 g des 90 gew.%igen Farbstoffs (in gemahlener Form) der Formel

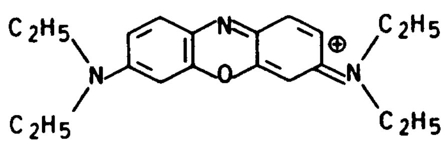 $1/2\ ZnCl_4^{2\ominus}$

und rührte bei Raumtemperatur 3,5 Stunden in einem Scheidetrichter. Nach einstündigem Stehen ließ man die untere wäßrige Phase ab und erhielt als obere Phase 243 g des in Ethylenglykolmonobutylether gelösten Farbstoff-Formiats.

Beispiel 2

89 g des getrockneten und gemahlenen Farbstoffs der Formel

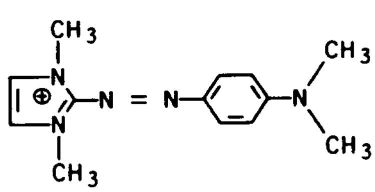 $CH_3OSO_3^{\ominus}$

wurden in eine Mischung aus 110 g 1-Methoxypropan-2-ol, 700 g wäßrige Natriumformiatlösung (42, gew.%ig) und 50 ml Wasser eingetragen und analog Beispiel 1 behandelt. Man erhielt 220 g des in 1-Methoxypropan-2-ol gelösten Farbstoff-Formiats.

Beispiel 3

92 g des Farbstoffs der Formel

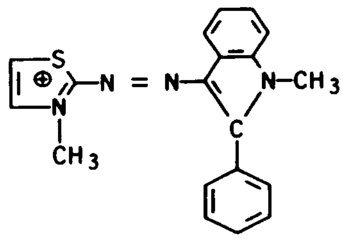

$Cl^{\ominus}$

wurden in eine Mischung aus 115 g Ethylenglykolmonophenylether, 500 g des Natriumsalzes der 2-Ethylhexansäure (in Form einer gesättigten wäßrigen Lösung) und 40 ml Wasser eingetragen. Man behandelte analog Beispiel 1 und erhielt 255 g des in Ethylenglykolmonophenylether gelösten Ethylhexanoats des Farbstoffs.

Beispiel 4

89 g des Farbstoffs der Formel

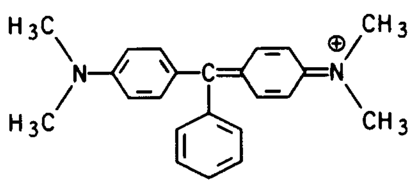

$1/2\ (COO)_2^{2\ominus}$

wurden in eine Mischung aus 110 g Ethylenglykolmonobutylether und 700 g einer gesättigten wäßrigen Lösung von Natriumpropionat eingetragen und gemäß Beispiel 1 aufgearbeitet. Man erhielt 220 g der konzentrierten Farbstofflösung, in der der Farbstoff als Propionat vorliegt.

Beispiel 5

125 g des Farbstoffs der Formel

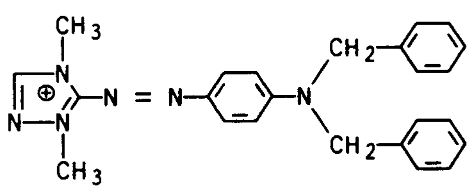

$1/2\ ZnCl_4^{2\ominus}$

wurden in eine Mischung aus 130 g Ethylenglykolmonoethylether, 800 g 45 gew.%ige wäßrige Natriumacetatlösung, 54 g des Natriumsalzes der Ethylendiamintetraessigsäure und 500 ml Wasser eingetragen und gemäß Beispiel 1 behandelt. Man erhielt 264 g der konzentrierten Farbstofflösung, in der der Farbstoff als Acetat vorliegt.

Beispiel 6

108 g des Farbstoffs der Formel

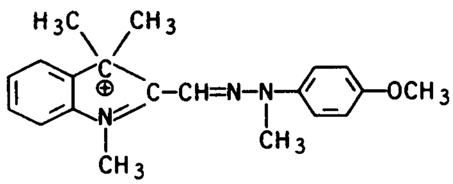

$CH_3SO_4^{\ominus}$

wurden in eine Mischung aus 120 g 1-Methoxypropan-2-ol und 950 g einer 36 gew.%igen wäßrigen Natriumbenzoatlösung eingetragen und analog Beispiel 1 behandelt. Man erhielt 248 g der organischen Phase, in der der Farbstoff als Benzoat enthalten ist.

Beispiel 7

129 g des Farbstoffs der Formel

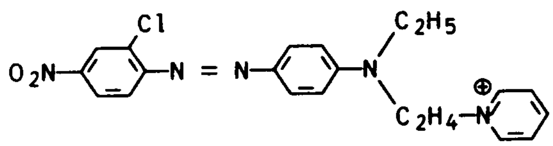

$1/2\ ZnCl_4^{2\ominus}$

wurden in eine Mischung aus 110 g Ethylenglykolmonobutylether, 800 g einer gesättigten wäßrigen Natriumpropionatlösung, 54 g des Natriumsalzes der Ethylendiamintetraessigsäure und 60 ml Wasser eingetragen und gemäß Beispiel 1 behandelt. Es resultierten 264 g organische Phase, die den Farbstoff als Propionat enthält.

Beispiel 8

109 g des Farbstoffs der Formel

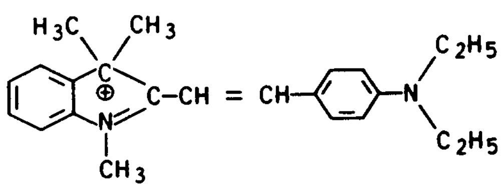

$1/2\ ZnCl_4^{2\ominus}$

wurden in eine Mischung aus 120 g 1-Methoxypropan-2-ol, 730 g 42,5 gew.%ige wäßrige Natriumformiatlösung, 49 g des Natriumsalzes der Nitrilotriessigsäure (90 Gew.%) und 60 ml Wasser eingetragen. Reaktion und Aufarbeitung erfolgten gemäß Beispiel 1. Man erhielt 245 g der den Farbstoff als Formiat enthaltenden Lösung.

Beispiel 9

89 g des Farbstoffs der Formel

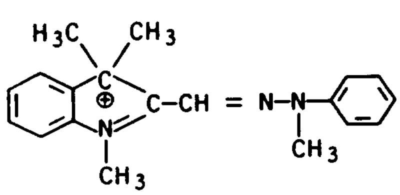

$NO_3^{\ominus}$

wurden in eine Mischung aus 110 g Ethylenglykolmonobutylether und 750 g einer gesättigten wäßrigen Lösung des Natriumsalzes der 2-Ethylhexansäure eingetragen und gemäß Beispiel 1 behandelt. Es resultierten 214 g konzentrierte Farbstofflösung, die den Farbstoff als 2-Ethylhexanoat enthält.

Analog Beispiel 1 werden die in der folgenden Tabelle aufgeführten Farbstoffe erhalten.

| Bsp. Nr. | Farbstoff-Kation | Farbstoff-Anion | Lösungsmittel |
|---|---|---|---|
| 10 | 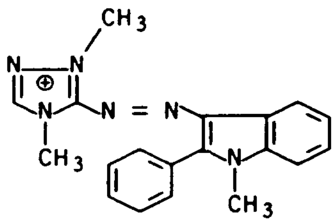 | $HCOO^{\ominus}$ | Ethylenglykol-monobutylether |
| 11 | 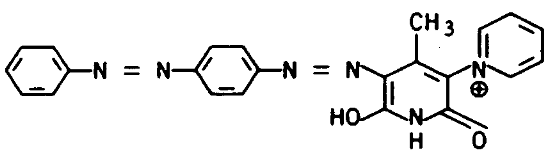 | 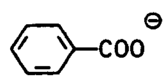 | 1-Methoxy-propan-2-ol |
| 12 | 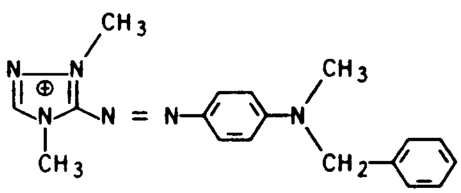 | $HCOO^{\ominus}$ | Ethylenglykol-monobutylether |
| 13 | 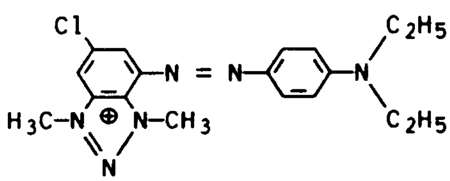 | $CH_3COO^{\ominus}$ | Ethylenglykol-monobutylether |
| 14 | 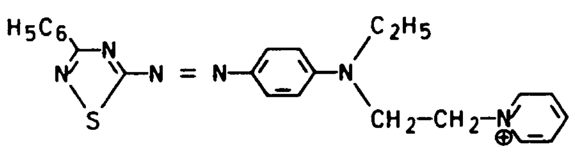 | $HCOO^{\ominus}$ | 1-Methoxy-propan-2-ol |
| 15 | 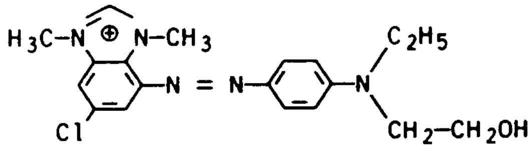 | $C_2H_5COO^{\ominus}$ | Ethylenglykol-monobutylether |

| Bsp. Nr. | Farbstoff-Kation | Farbstoff-Anion | Lösungsmittel |
|---|---|---|---|
| 16 | 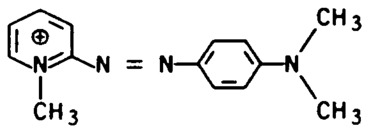 | $HCOO^{\ominus}$ | 1-Methoxy-propan-2-ol |
| 17 | 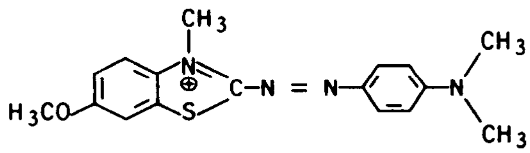 | $HCOO^{\ominus}$ | Ethylenglykol-monobutylether |
| 18 | 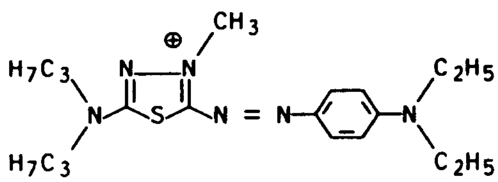 | $HCOO^{\ominus}$ | Ethylenglykol-monobutylether |
| 19 | 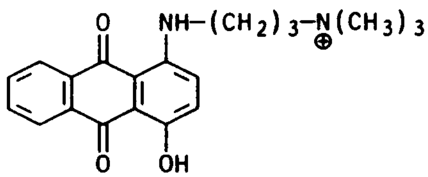 | $HCOO^{\ominus}$ | Ethylenglykol-monobutylether |
| 20 | 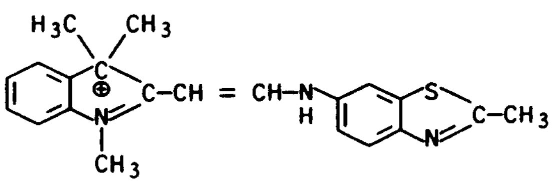 | $CH_3COO^{\ominus}$ | 1-Methoxy-propan-2-ol |
| 21 | 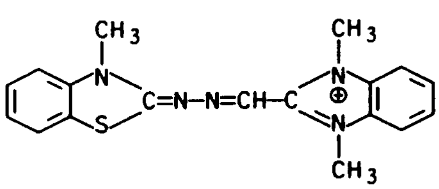 | $HCOO^{\ominus}$ | Ethylenglykol-monobutylether |

| Bsp. Nr. | Farbstoff-Kation | Farbstoff-Anion | Lösungsmittel |
|---|---|---|---|
| 22 | 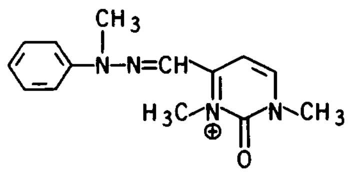 | $HCOO^{\ominus}$ | Ethylenglykol-monobutylether |
| 23 | 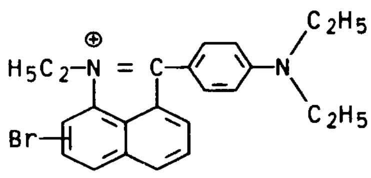 | $HCOO^{\ominus}$ | Ethylenglykol-monobutylether |

## Patentansprüche

1. Verfahren zur Herstellung konzentrierter Lösungen von kationischen Farbstoffen, dadurch gekennzeichnet, daß man die kationischen Farbstoffe, die als Gegenionen die bei ihrer Herstellung üblicherweise anfallenden Anionen aufweisen, in einem Reaktionsmedium, enthaltend Wasser und einen Glykolether, mit Alkalisalzen von Monocarbonsäuren und gegebenenfalls mit Komplexbildnern behandelt und die organische Phase, die die kationischen Farbstoffe in Form ihrer Monocarbonsäuresalze enthält, von der wäßrigen Phase abtrennt.

2. Verfahren gemäß Anspruch 1, dadurch gekennzeichnet, daß man dem Reaktionsmedium zusätzlich einen Komplexbildner zusetzt, wenn die kationischen Farbstoffe ein metallhaltiges Gegenion aufweisen.

## Claims

1. A process for preparing a concentrated solution of a cationic dye, which comprises treating the cationic dye, which contains as the counterion the anion customarily present during its preparation, with an alkali metal salt of a monocarboxylic acid and with or without a complexing agent in a reaction medium containing water and a glycol ether, and separating off the organic phase, which contains the cationic dye in the form of its monocarboxylic acid salt, from the aqueous phase.

2. A process as claimed in claim 1, wherein a complexing agent is additionally added to the reaction medium if the cationic dye contains a metal-containing counterion.

## Revendications

1. Procédé de préparation de solutions concentrées de colorants cationiques, caractérisé en ce que l'on traite les colorants cationiques qui présentent, en tant que contre-ions, les anions qui sont habituellement produits au cours de leur préparation, dans un milieu réactionnel contenant de l'eau et un éther de glycol, avec des sels de métaux alcalins d'acides monocarboxyliques et éventuellement avec des agents complexants, et en ce que l'on sépare de la phase aqueuse la phase organique qui contient les colorants cationiques sous forme de leurs sels d'acides monocarboxyliques.

2. Procédé selon la revendication 1, caractérisé en ce que l'on ajoute de plus un agent complexant au milieu réactionnel, lorsque les colorants cationiques présentent un contre-ion contenant un métal.